# EUROPEAN PATENT SPECIFICATION

(11) **EP 4 478 528 B1**
(45) Date of publication and mention of the grant of the patent: **27.05.2026**
(21) Application number: 24172584.5
(22) Date of filing: 25.04.2024
(51) Int. Cl.: H01M 50/609

(54) **LOWER PLASTIC STRUCTURE, END COVER ASSEMBLY, ENERGY STORAGE DEVICE AND ELECTRICAL EQUIPMENT**
UNTERE KUNSTSTOFFSTRUKTUR, ENDKAPPENANORDNUNG, ENERGIESPEICHERVORRICHTUNG UND ELEKTRISCHE AUSRÜSTUNG
STRUCTURE EN PLASTIQUE INFÉRIEURE, ENSEMBLE COUVERCLE D'EXTRÉMITÉ, DISPOSITIF DE STOCKAGE D'ÉNERGIE ET ÉQUIPEMENT ÉLECTRIQUE

(30) Priority: 16.06.2023 CN 202310719043
(43) Date of publication of application: 18.12.2024
(73) Proprietor: Hithium Tech HK Limited, Hong Kong (HK)
(72) Inventor: LI, Maosong, Xiamen, 361100 (CN)
(74) Representative: RGTH

(56) References cited:
- CN-A- 114 725 593
- CN-U- 213 601 921
- JP-A- 2016 207 353

## Description

### TECHNICAL FIELD

The present disclosure relates to the field of energy storage technology, and in particular to a lower plastic structure, an end cover assembly, an energy storage device and electrical equipment.

### BACKGROUND

Secondary battery (Rechargeable battery), also known as rechargeable battery or storage battery, refers to a battery that can be recharged to activate the active substance and continue to be used after the battery is discharged. The recyclable characteristics of secondary battery have gradually made the secondary battery the main power source for electrical equipment.

Related technologies are known from a patent application publication no. CN114725593A1; a patent application publication no. JP2016207353A; and a patent application publication no. CN213601921U.

### SUMMARY

The invention is defined by the independent claims. Embodiments of the present disclosure disclose a lower plastic structure, an end cover assembly, an energy storage device and electrical equipment, which can effectively shorten the time for the electrolyte to infiltrate the bare cell, thereby helping to improve the infiltration efficiency of the bare cell.

In order to achieve the above purposes, according to a first aspect of the present disclosure, there is provided a lower plastic structure, including a lower plastic part, the lower plastic part has a first surface and a second surface facing away from the first surface, the lower plastic part is provided with a first liquid injection hole penetrating the first surface and the second surface; and a flow guide, the flow guide includes a connection component and an elastic flow guide component, the connection component is connected to the first surface, and the elastic flow guide component is connected to the connection component and there is a gap between the elastic flow guide component and the first liquid injection hole, and a projection of the elastic flow guide component on the first surface at least covers part of the first liquid injection hole, the elastic flow guide component has a third surface facing toward the first surface and a fourth surface facing away from the third surface, the third surface protrudes toward the first surface, so that the third surface is configured to guide an electrolyte injected through the first liquid injection hole, and the fourth surface is recessed toward the third surface to form a recessed portion.

An additional flow guide is provided on the lower plastic part, and the projection of the elastic flow guide component of the flow guide on the lower plastic part covers the first liquid injection hole, and the elastic flow guide component has a third surface disposed toward the first surface and a fourth surface opposite to the third surface. The third surface protrudes toward the first surface, so that the third surface can be used to guide the electrolyte injected through the first liquid injection hole to different positions of the bare cell, which can increase the area where the electrolyte infiltrates the bare cell, avoid the injection of the electrolyte from being concentrated and biased towards one side of the bare cell, and improve the problem of uneven absorption of electrolyte by the bare cell. Thus, it is beneficial to improving the absorption efficiency of the electrolyte by the bare cell, shortening the infiltration time of the bare cell, and improving the infiltration efficiency of the bare cell; at the same time, since the projection of the elastic flow guide component on the lower plastic part covers the first liquid injection hole, the electrolyte injected through the first liquid injection hole can first contact the third surface and then fall on the bare cell, so as to prevent the electrolyte from directly impacting the bare cell, thus it is beneficial to reduce the probability of damage to the bare cell due to direct impact of the electrolyte on the bare cell.

Furthermore, since the elastic flow guide component has an elastic structure, and the fourth surface of the elastic flow guide component is recessed toward the third surface to form a recessed portion, when the elastic flow guide component is impacted by the electrolyte, the recessed portion can be used to provide a deformation space for the deformation of the elastic flow guide component, so that the elastic flow guide component can deform when it is impacted by the electrolyte. Specifically, when a large flow of electrolyte is injected through the first liquid injection hole, the impact force of the electrolyte on the elastic flow guide component is large, and the large impact force causes the elastic flow guide component to produce a relatively large deformation, so that the third surface of the elastic flow guide component is flattened and tends to be flat. At this time, the angle between the flow guide direction of the electrolyte on the third surface and the axis direction of the first liquid injection hole is relatively large, causing the electrolyte to be sprayed relatively far away, so that the electrolyte can be sprayed to the position of the bare cell far away from the first liquid injection hole. When a small flow of electrolyte is injected through the first liquid injection hole, the impact force of the electrolyte on the elastic flow guide component is small, and the small impact force causes the elastic flow guide component to produce relatively small deformation. At this time, the angle between the flow guide direction of the electrolyte on the third surface and the axial direction of the first liquid injection hole is relatively small, and the electrolyte flies relatively close, so that the electrolyte can be sprayed to the position of the bare cell close to the first liquid injection hole. That is to say, by providing an elastic flow guide component, the impact force during injection can be controlled by controlling the flow rate and volume for injecting the electrolyte, thereby indirectly controlling the protruding degree of the third surface toward the first surface, that is, indirectly controlling the angle between the flow guide direction of the electrolyte on the third surface and the axial direction of the first liquid injection hole to further adjust the spraying distance of the electrolyte, so that the electrolyte can be dispersed, guided, and dripped evenly onto the various positions of the bare cell according to the needs of the product, such as the size of the bare cell, which facilitates more even and rapid infiltration of the bare cell and speeds up the infiltration time.

As an optional embodiment, in an embodiment according to the first aspect of the present disclosure, the elastic flow guide component is a solid of revolution structure, and a center of the third surface is provided arched towards the first surface, and a center of the fourth surface is recessed toward the third surface to form the recessed portion. In this way, the third surface can be configured as a rotational surface with the center arched toward the first surface, and the fourth surface can be configured as a rotational surface with the center recessed toward the third surface. Also, it can be ensured that the center of the third surface is set opposite to the center of the fourth surface, so as to ensure that the elastic flow guide component deforms from the top close to the first surface to the direction away from the first surface, so that the elastic flow guide component can still maintain the third surface to be a convex shape toward the first surface even if the elastic flow guide component is impacted by the electrolyte and deforms, thereby ensuring that the third surface can always play a role in guiding flow.

As an optional embodiment, in an embodiment according to the first aspect of the present disclosure, the third surface and the fourth surface are arranged parallel to each other. This can ensure that the thickness of any position of the elastic flow guide component is consistent, so as to avoid that the thickness of a certain position is too thin and leads to rupture when subjected to the impact of the electrolyte, and to avoid that the thickness of a certain position is too thick and leads to difficulty in generating a deformation when subjected to the impact of the electrolyte, which leads to a situation in which the elastic flow guide component has a poor effect of flow guiding. That is, by making the third surface and the fourth surface in parallel with each other, it is possible to ensure the structural strength of the elastic flow guide component while at the same time facilitating the deformation of the elastic flow guide component when it is impacted by the electrolyte, adjusting the spraying distance of the electrolyte, and improving the uniformity of the liquid injection.

As an optional embodiment, in an embodiment according to the first aspect of the present disclosure, a intersection line of the third surface intersepted by a plane where a central rotation axis of the elastic flow guide component is located is a curve, the curve includes a first line segment and a second line segment that are symmetrical about the central rotation axis of the third surface, curvatures of the first line segment and the second line segment gradually decrease along a direction from a position close to the first surface to a position away from the first surface. The smaller the curvatures of the first line segment and the second line segment, the more gentle the edge area of the third surface that is farther away from the first surface 11a, and the greater the angle between the flow guide direction of the electrolyte on the edge area of the third surface and the axial direction of the first liquid injection hole, which facilitates the electrolyte to be sprayed farther, thereby facilitating the electrolyte to be sprayed to the position of the bare cell farther away from the first liquid injection hole 111 to improve overall injection uniformity.

As an optional embodiment, in an embodiment according to the first aspect of the present disclosure, the elastic flow guide component is made of rubber, and an elastic modulus E of the elastic flow guide component is 0.00584GPa~ 0.00984GPa, and/or a Poisson's ratio of the elastic flow guide component is µ = 0.27~0.67. By controlling the elastic modulus of the elastic flow guide component within the above range, it can be ensured that the elastic flow guide component easily produces sufficient deformation when impacted by the electrolyte, thereby facilitating indirect control of the protruding degree of the third surface toward the first surface by controlling the injection flow rate and volume of the electrolyte to control the impact force during liquid injection, so as to adjust the spraying distance of the electrolyte, and thus the electrolysis can be dispersed, guided, and dripped evenly onto the various positions of the bare cell according to the needs of the product, such as the size of the bare cell, thereby improving the infiltration effect. By controlling the Poisson's ratio of the elastic flow guide component within the above range, it can be ensured that the elastic flow guide component deforms from the top close to the first surface to a direction away from the first surface, so that the elastic flow guide component can still maintain the shape of the third surface convex toward the first surface even after being deformed by the impact of the electrolyte, thereby ensuring that the third surface can always play a role in guiding flow.

As an optional embodiment, in an embodiment according to the first aspect of the present disclosure, the third surface has a central area closest to the first liquid injection hole, and a center of the central area is eccentrically arranged with a center of the first liquid injection hole, and the center of the first liquid injection hole is located between the center of the central area and a center of the lower plastic part.

The central area of the third surface is located at a side of the center of the first liquid injection hole away from the center of the lower plastic part, so that more electrolyte can be directly dripped onto the area of a side of the third surface close to the center of the lower plastic part, and flows to the center of the bare cell and a side of the bare cell away from the first liquid injection hole along the area on a side of the third surface close to the center of the lower plastic part, thereby allowing more electrolyte to flow to the center of the bare cell and the side of the bare cell away from the first liquid injection hole to improve the uniformity of the overall liquid injection.

As an optional embodiment, in an embodiment according to the first aspect of the present disclosure, a projection of the central area on the first surface is located in the first liquid injection hole. This can ensure that the electrolyte drops can hit the central area of the third surface, so that the degree of deformation of the elastic flow guide component can be controlled by adjusting the impact force during liquid injection, so as to adjust the angle between the flow guide direction of the electrolyte on the third surface and the axial direction of the first liquid injection hole. Therefore, the spraying distance of the electrolyte can be adjusted, in order to meet the infiltration requirements of bare cells of different sizes; at the same time, it can also improve the uniformity of the overall liquid injection.

As an optional embodiment, in an embodiment according to the first aspect of the present disclosure, the center of the first liquid injection hole and the center of the lower plastic part are connected to form a central connection line, and the lower plastic part on both sides of the central connection line are symmetrical about the central connection line; and a projection of the center of the central area on the first surface is located on the central connection line.

This can prevent the center of the central area from being biased toward either side of the central connection line. The electrolyte can be dispersed and evenly guided to both sides of the central connection line, so that the electrolyte can be better dispersed and dripped evenly to various positions of the bare cell, facilitating the bare cell to be infiltrated more evenly and quickly.

As an optional embodiment, in an embodiment according to the first aspect of the present disclosure, the third surface has a central area closest to the first liquid injection hole, and a distance between the central area of the third surface and the first liquid injection hole along an axial direction of the first liquid injection hole is 1mm~2.5mm. On the one hand, the third surface is avoided to be too close to the first liquid injection hole, thereby avoiding the phenomenon of anti-bubbling and ensuring normal liquid injection; on the other hand, the third surface is avoided to be too far away from the first liquid injection hole to ensure that the third surface can divert most of the electrolyte, so that the electrolyte can be better dispersed and guided to various positions of the bare cell, so as to facilitate more even and rapid infiltration of the bare cell.

As an optional embodiment, in an embodiment according to the first aspect of the present disclosure, a shape of the lower plastic part is square, and an explosion-proof valve fence protrudes from the middle of the first surface, the explosion-proof valve fence extends along a first direction, a groove is provided in the middle of the explosion-proof valve fence, and the groove penetrates both sides of the explosion-proof valve fence in a second direction, the first direction and the second direction are both parallel to the first surface, the first direction and the second direction are perpendicular to each other, and a surface of the elastic flow guide component away from the first surface is higher than a groove bottom surface of the groove or the surface of the elastic flow guide component away from the first surface is flush with the groove bottom surface of the groove in a direction of the first surface toward the elastic flow guide component, to ensure that the electrolyte can pass through the groove in the middle of the explosion-proof valve fence and flow to the position of the lower plastic part farther away from the first liquid injection hole, so that the electrolyte can flow to the position of the bare cell farther away from the first liquid injection hole, and thus the electrolyte can be dispersed, guided and dripped evenly onto various positions of the bare cell, which facilitates a more uniform and rapid infiltration of the bare cell; or,

a shape of the lower plastic part is circular, and an arc-shaped support fence protrudes from the edge of the first surface, and a surface of the elastic flow guide component away from the first surface is lower than a surface of the arc-shaped support fence away from the first surface in a direction of the first surface toward the elastic flow guide component.

As an optional embodiment, in an embodiment according to the first aspect of the present disclosure, there are multiple connection components, and the multiple connection components are respectively connected to the first surface, and the multiple connection components are respectively connected to the elastic flow guide component, and heights of the respective connection components in an axial direction of the first liquid injection hole are same. Multiple connection components are provided, so that there are at least two connection positions between the elastic flow guide component and the lower plastic part, thereby facilitating the connection stability between the elastic flow guide component and the lower plastic part. By keeping the heights of all the connection components in the axial direction of the first liquid injection hole the same, it can prevent the elastic flow guide component from deforming or even twisting before being impacted by the electrolyte, thereby ensuring the structural stability of the elastic flow guide component.

As an optional embodiment, in an embodiment according to the first aspect of the present disclosure, the multiple connection components are evenly spaced along a circumferential direction of the first liquid injection hole on an edge of the first liquid injection hole. In this way, the force on the elastic flow guide component can be relatively uniform. When the liquid is injected, the elastic flow guide component will not be deflected, so as to avoid concentratedly guiding the electrolyte on a certain position of the bare cell, thereby ensuring the overall uniformity of the liquid injection.

As an optional embodiment, in an embodiment according to the first aspect of the present disclosure, the connection component is provided with a flow guide surface toward a center of the elastic flow guide component, the flow guide surface is a flow guide arc surface or a flow guide slope, and the flow guide surface is configured to guide an electrolyte injected through the first liquid injection hole. The arrangement of the flow guide surface on the connection component allows the electrolyte to use the flow guide surface for secondary shunting and guiding, which is beneficial to further improving the injection efficiency of the electrolyte.

As an optional embodiment, in an embodiment according to the first aspect of the present disclosure, when the flow guide surface is a flow guide slope, the flow guide slope includes a first flow guide sub-slope and a second guide sub-slope, the first flow guide sub-slope and the second guide sub-slope are connected at an angle, an intersection line of the first guide sub-slope and the second guide sub-slope is parallel to an axis of the first liquid injection hole, the first flow guide sub-slope and the second flow guide sub-slope are symmetrical about a plane where the intersection line and the axis of the first liquid injection hole are located. In this way, the electrolyte can be dispersed from the position of the intersection line, and can substantially flow evenly to various positions along the first flow guide sub-slope and the second flow guide sub-slope.

As an optional embodiment, in an embodiment according to the first aspect of the present disclosure, the connection component and the lower plastic part are integrally formed, which can shorten the processing time, simplify the installation process, and improve the installation efficiency; and during the injection molding process, the connection between the connection component and the lower plastic part is usually fused and connected together, therefore the connection reliability and stability between the connection component and the lower plastic part are relatively high.

Or, the connection component is hot-melt connected to the lower plastic part. The installation method is relatively simple, and compared with traditional mechanical fastening (riveting, screwing, etc.), the hot-melt connection makes it possible to fuse the joint between the connection component and the lower plastic part together, with high connection strength, and the overall mass of the lower plastic structure after installation is lighter, which is beneficial to the lightweight design of the lower plastic structure.

Or, the connection component is detachably connected to the lower plastic part. That is, the connection component can be detached from the lower plastic part, and thus the flow guide can be detached from the lower plastic part. Therefore, when the elasticity of the elastic flow guide component fails, the flow guide can be removed and replaced with a new one instead of replacing the entire lower plastic structure, thereby helping to reduce replacement costs.

According to a second aspect of the present disclosure, there is provided an end cover assembly, wherein the end cover assembly includes an end cover plate and the lower plastic structure according to the above first aspect, the lower plastic part of the lower plastic structure is connected to the end cover plate, and the flow guide is located on a side of the lower plastic part away from the end cover plate, the end cover plate is provided with a second liquid injection hole connected to the first liquid injection hole. The end cover assembly including the lower plastic structure according to the above first aspect can effectively shorten the time for the electrolyte to infiltrate the bare cell, and improve the infiltration efficiency of the bare cell.

According to a third aspect of the present disclosure, there is provided an energy storage device, wherein the energy storage device has a casing, a bare cell and an end cover assembly according to the above second aspect, the casing has an opening, the bare battery core is arranged in the casing, and the end cover plate is sealingly connected to the opening and the lower plastic structure is arranged toward the bare cell. For the energy storage device including the end cover assembly according to the above second aspect, since the end cover assembly according to the second aspect has the beneficial effect of the lower plastic structure according to the first aspect, the energy storage device according to the third aspect of the disclosure can effectively shorten the time for the electrolyte to infiltrate the bare cell, and improve the infiltration efficiency of the bare cell.

According to a fourth aspect of the present disclosure, there is provided an electrical equipment, wherein the electrical equipment includes the energy storage device according to the third aspect. For the electrical equipment including the energy storage device according to the third aspect, since the energy storage device according to the third aspect has the beneficial effect of the lower plastic structure according to the first aspect, the electrical equipment according to the fourth aspect of the disclosure can effectively shorten the time for the electrolyte to infiltrate the bare cell, and improve the infiltration efficiency of the bare cell.

Compared with the prior art, the beneficial effects of the present disclosure are:

In the lower plastic structure, the end cover assembly, the energy storage device and the electrical equipment provided by the embodiment of the present disclosure, an additional flow guide is provided on the lower plastic part, and the projection of the elastic flow guide component of the flow guide on the lower plastic part covers the first liquid injection hole, and the elastic flow guide component has a third surface disposed toward the first surface and a fourth surface opposite to the third surface. The third surface is protruding toward the first surface, so that the protruding part can be used to guide the electrolyte injected through the first liquid injection hole to different positions of the bare cell, which can increase the area where the electrolyte infiltrates the bare cell, avoid the injection of the electrolyte from being concentrated and biased towards one side of the bare cell, and improve the problem of uneven absorption of electrolyte by the bare cell. Thus, it is beneficial to improving the absorption efficiency of the electrolyte by the bare cell, shortening the infiltration time of the bare cell, and improving the infiltration efficiency of the bare cell; at the same time, since the projection of the elastic flow guide component on the lower plastic part covers the first liquid injection hole, the electrolyte injected through the first liquid injection hole can first contact the third surface and then fall on the bare cell, so as to prevent the electrolyte from directly impacting the bare cell, thus it is beneficial to reduce the probability of damage to the bare cell due to direct impact of the electrolyte on the bare cell.

Furthermore, since the elastic flow guide component has an elastic structure, and the fourth surface of the elastic flow guide component is recessed toward the third surface to form a recessed portion, when the elastic flow guide component is impacted by the electrolyte, the recessed portion can be used to provide a deformation space for the deformation of the elastic flow guide component, so that the elastic flow guide component can deform when it is impacted by the electrolyte. Specifically, when a large flow of electrolyte is injected through the first liquid injection hole, the impact force of the electrolyte on the elastic flow guide component is large, and the large impact force causes the elastic flow guide component to produce a relatively large deformation, so that the third surface of the elastic flow guide component is flattened and tends to be flat. At this time, the angle between the flow guide direction of the electrolyte on the third surface and the axis direction of the first liquid injection hole is relatively large, causing the electrolyte to be sprayed relatively far away, so that the electrolyte can be sprayed to the position of the bare cell far away from the first liquid injection hole. When a small flow of electrolyte is injected through the first liquid injection hole, the impact force of the electrolyte on the elastic flow guide component is small, and the small impact force causes the elastic flow guide component to produce relatively small deformation. At this time, the angle between the flow guide direction of the electrolyte on the third surface and the axial direction of the first liquid injection hole is relatively small, and the electrolyte flies relatively close, so that the electrolyte can be sprayed to the position of the bare cell close to the first liquid injection hole. That is to say, by providing an elastic flow guide component, the impact force during injection can be controlled by controlling the flow rate and volume for injecting the electrolyte, thereby indirectly controlling the protruding degree of the third surface toward the first surface, that is, indirectly controlling the angle between the flow guide direction of the electrolyte on the third surface and the axial direction of the first liquid injection hole to further adjust the spraying distance of the electrolyte, so that the electrolyte can be dispersed, guided, and dripped evenly onto the various positions of the bare cell according to the needs of the product, such as the size of the bare cell, which facilitates more even and rapid infiltration of the bare cell and speeds up the infiltration time.

### BRIEF DESCRIPTION OF THE DRAWINGS

In order to more clearly illustrate the technical solutions in the embodiments of the present disclosure, the drawings required in the embodiments will be briefly introduced below. Obviously, the drawings in the following description are only some embodiments of the present disclosure. Those of ordinary skill in the art can also obtain other drawings based on these drawings without exerting creative efforts.
FIG. 1 is a schematic three-dimensional structural diagram of the lower plastic structure according to the embodiment of the present disclosure;
FIG. 2 is a schematic three-dimensional structural diagram of the lower plastic structure according to the embodiment of the present disclosure from another perspective;
FIG. 3 is a front view of the lower plastic structure when the elastic flow guide component is subjected to a small impact force according to the embodiment of the present disclosure;
FIG. 4 is a front view of the lower plastic structure when the elastic flow guide component is subjected to a large impact force according to the embodiment of the present disclosure;
FIG. 5 is a top view of the lower plastic structure according to the embodiment of the present disclosure;
FIG. 6 is a cross-sectional view of the lower plastic structure in FIG. 5 along the A-A direction;
FIG. 7 is a schematic three-dimensional structural diagram of a circular lower plastic structure according to the embodiment of the present disclosure;
FIG. 8 is a top view of the lower plastic structure in FIG. 7;
FIG. 9 is a cross-sectional view of the lower plastic structure in FIG. 8 along the B-B direction;
FIG. 10 is a schematic three-dimensional structural view of the elastic flow guide component when the protruding part has an end face according to the embodiment of the present disclosure;
FIG. 11 is a schematic three-dimensional structural diagram of the elastic flow guide component from another perspective when the protruding part has an end face according to the embodiment of the present disclosure;
FIG. 12 is a top view of the lower plastic structure when the center of the end face and the center of the lower plastic part are eccentrically arranged according to the embodiment of the present disclosure;
FIG. 13 is a partial enlarged view at E in FIG. 12;
FIG. 14 is a schematic three-dimensional structural diagram of the elastic flow guide component when the protruding part has a protruding point according to the embodiment of the present disclosure;
FIG. 15 is a top view of the lower plastic structure when the protruding point and the center of the lower plastic part are eccentrically arranged according to the embodiment of the present disclosure;
FIG. 16 is a partial enlarged view at F in FIG. 15;
FIG. 17 is a top view of the elastic flow guide component according to the embodiment of the present disclosure;
FIG. 18 is a schematic structural diagram of the end cover assembly according to the embodiment of the present disclosure;
FIG. 19 is a schematic structural diagram of an energy storage device according to the embodiment of the present disclosure.

### Explanation of main reference numbers

10 - lower plastic structure; 11 - lower plastic part; 11a - first surface; 11b - second surface; 111 - first liquid injection hole; 12 - flow guide; 121 - connection component; 1211 - flow guide surface; 1211a - first flow guide sub-slope; 1211b - second flow guide sub-slope; 122 - elastic flow guide component; 122a - third surface; 122b - fourth surface; 122c - central area; 1221 - recessed portion; 1222a - first line segment; 1222b - second line segment; 13 - explosion-proof valve fence; 131 - groove; 1311 - groove bottom; 14 - arc support fence; M1 - center connection;
20 - end cover assembly; 21 - end cover plate; 211 - second liquid injection hole;
30 - energy storage device; 31 - casing; 311 - opening; 32 - bare cell.

### DETAILED DESCRIPTION

The technical solutions in the embodiments of the present disclosure will be clearly and completely described below with reference to the accompanying drawings in the embodiments of the present disclosure. Obviously, the described embodiments are only some, not all, of the embodiments of the present disclosure. Based on the embodiments of the present disclosure, all other embodiments obtained by those of ordinary skill in the art without creative efforts fall within the scope of protection of the present disclosure.

In the present disclosure, the orientations or positional relationships indicated by the terms "above", "under", "left", "right", "front", "back", "top", "bottom", "inside", "outside", "in", "vertical", "horizontal", "horizontal", "longitudinal", etc. are based on the orientations or positional relationships shown in the drawings. These terms are mainly used to better describe the present disclosure and the embodiments, and are not intended to limit the indicated device, element or component to a specific orientation, or to be constructed and operated in a specific orientation.

Moreover, some of the above terms may also be used to express other meanings in addition to indicating orientation or positional relationships. For example, the term "above" may also be used to express a certain dependence relationship or connection relationship in some cases. For those of ordinary skill in the art, the specific meanings of these terms in the present disclosure can be understood according to specific circumstances.

In addition, the terms "mounted," "set," "provided," "connected," and "coupled" are to be construed broadly. For example, it can be a fixed connection, a detachable connection, or an integral structure; it can be a mechanical connection or an electrical connection; it can be directly connected, or indirectly connected through an intermediate medium, or internally connected between two devices, components or parts. For those of ordinary skill in the art, the specific meanings of the above terms in the present disclosure can be understood according to specific circumstances.

In addition, the terms "first", "second", etc. are mainly used to distinguish different devices, components or parts (the specific types and structures may be the same or different), and are not used to indicate or imply the relative importance and number of the indicated devices, components or parts. Unless otherwise stated, "multiple" means two or more.

The technical solution of the present disclosure will be further described below with reference to the embodiments and drawings.

As the demand for the secondary battery gradually increases, people have higher and higher performance requirements for various aspects of the secondary battery, especially the requirement for the cycle performance of the secondary battery. The quality of the liquid injection effect of the secondary battery is an important parameter that affects the cycle performance of the battery.

The secondary battery usually consists of an end cover assembly, a bare cell and a casing. The end cover assembly includes an end cover, a lower plastic part and other components. A liquid injection hole is provided through the end cover and the lower plastic part to allow the electrolyte to be injected into the interior of the casing through the liquid injection hole on the end cover and the lower plastic part to infiltrate the bare cell. However, in order to avoid other structures (such as the installation position of the pole or the installation position of the explosion-proof valve, etc.), the liquid injection hole is usually deviated from the central area of the bare cell, which easily causes the electrolyte to be concentrated and injected to one side of the bare cell. As a result, uneven absorption of the electrolyte is likely to occur, which will prolong the time for the electrolyte to fully infiltrate the bare cell, thereby affecting the infiltration efficiency.

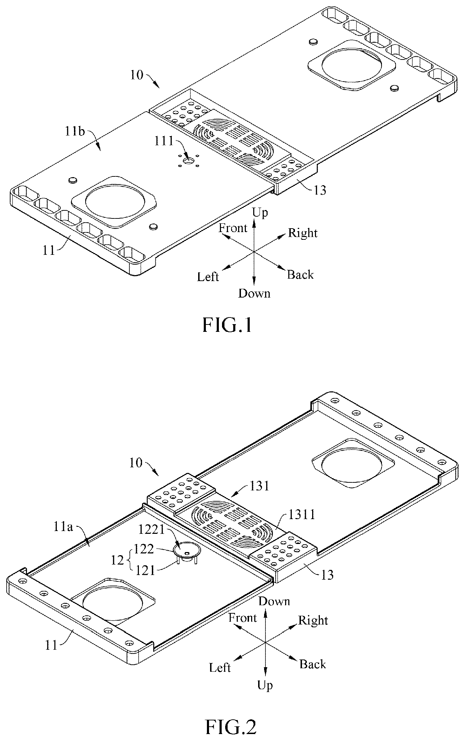

Referring to FIGS. 1 to 4, an embodiment of the present disclosure discloses a lower plastic structure. The lower plastic structure 10 includes a lower plastic part 11 and a flow guide 12. The lower plastic part 11 has a first surface 11a and a second surface 11b facing away from the first surface 11a. The lower plastic part 11 is provided with a first liquid injection hole 111 penetrating the first surface 11a and the second surface 11b. The flow guide 12 includes a connection component 121 and an elastic flow guide component 122. The connection component 121 is connected to the first surface 11a of the lower plastic part 11. The elastic flow guide component 122 is connected to the connection component 121 and there is a gap between the elastic flow guide component 122 and the first liquid injection hole 111, so that the elastic flow guide component 122 can be connected to the first surface 11a of the lower plastic part 11 through the connection component 121. The projection of the elastic flow guide component 122 on the first surface 11a at least covers part of the first liquid injection hole 111. That is, the projection of the elastic flow guide component 122 on the first surface 11a can cover one part of the first liquid injection hole 111, and the other part of the first liquid injection hole 111 is not covered by the projection of the elastic flow guide component 122 on the first surface 11a; or, the projection of the elastic flow guide component 122 on the first surface 11a covers the entire first liquid injection hole 111. In this way, the electrolyte injected through the first liquid injection hole 111 can first flow to the elastic flow guide component 122. The elastic flow guide component 122 has a third surface 122a facing toward the first surface 11a and a fourth surface 122b facing away from the third surface 122a. The third surface 122a protrudes toward the first surface 11a, so that the third surface 122a can be used to guide the electrolyte injected through the first liquid injection hole 111. That is, during liquid injection, the electrolyte injected through the first liquid injection hole 111 can flow along the third surface 122a and dispersed and shot to different positions of the bare cell from the edge of the third surface 122a. That is, during liquid injection, the electrolyte injected through the first liquid injection hole 111 can be guided by the third surface 122a and dispersed and shot to different positions of the bare cell. The fourth surface 122b is recessed toward the third surface 122a to form a recessed portion 1221.

In the lower plastic structure 10 provided in the present disclosure, an additional flow guide 12 is provided on the lower plastic part 11. The projection of the elastic flow guide component 122 of the flow guide 12 on the lower plastic part 11 covers the first liquid injection hole 111. The third surface 122a of the elastic flow guide component 122 facing toward the first surface 11a protrudes toward the first surface 11a. Therefore, the third surface 122a can be used to guide the electrolyte injected through the first liquid injection hole 111 to different positions of the bare cell, which can increase the area where the electrolyte infiltrates the bare cell, avoid the injection of the electrolyte from being concentrated and biased towards one side of the bare cell, and improve the problem of uneven absorption of electrolyte by the bare cell, thereby helping to improve the absorption efficiency of the electrolyte by the bare cell, shorten the infiltration time of the bare cell and improve the infiltration efficiency of the bare cell. At the same time, since the projection of the elastic flow guide component 122 on the lower plastic part 11 covers the first liquid injection hole 111, the electrolyte injected through the first liquid injection hole 111 can first contact the third surface 122a and then fall on the bare cell, so as to prevent the electrolyte from directly impacting the bare cell, thereby helping to reduce the probability of damage to the bare cell due to the direct impact of the electrolyte on the bare cell.

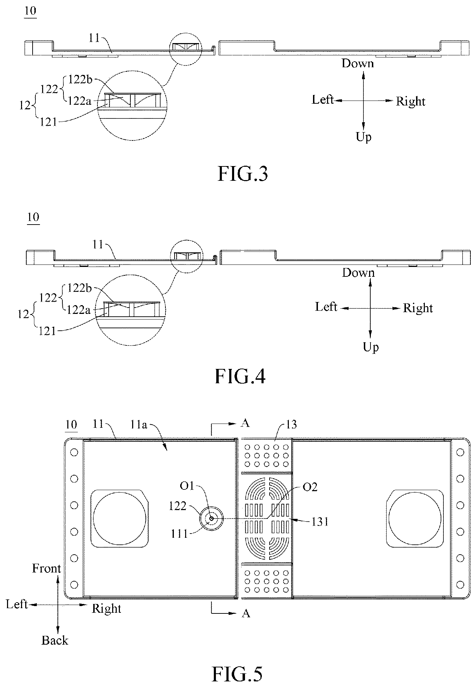

Furthermore, since the elastic flow guide component 122 has an elastic structure, and the fourth surface 122b of the elastic flow guide component 122 is recessed toward the third surface 122a to form a recessed portion 1221, when the elastic flow guide component 122 is impacted by the electrolyte, the recessed portion 1221 can be used to provide a deformation space for deformation of the elastic flow guide component 122, so that the elastic flow guide component 122 can deform when it is impacted by the electrolyte. Specifically, when a small flow of electrolyte is injected through the first liquid injection hole 111, as shown in FIGS. 2 and 3, the impact force of the electrolyte on the elastic flow guide component 122 is small, and the small impact force causes the elastic flow guide component 122 to produce relatively small deformation. At this time, the angle between the flow guide direction of the electrolyte on the third surface 122a and the axial direction of the first liquid injection hole 111 is small, and the electrolyte flies relatively close, so that the electrolyte can be sprayed to the position of the bare cell close to the first liquid injection hole 111. When a large flow of electrolyte is injected through the first liquid injection hole 111, as shown in FIGS. 2 and 4, the impact force of the electrolyte on the elastic flow guide component 122 is relatively large, and the large impact force causes the elastic flow guide component 122 to produce relatively large deformation, so that the third surface 122a of the elastic flow guide component 122 is flattened and tends to be flat. At this time, the angle between the flow guide direction of the electrolyte on the third surface 122a and the axial direction of the first liquid injection hole 111 is relatively large, causing the electrolyte flies relatively far away, so that the electrolyte can be sprayed to the position of the bare cell far away from the first liquid injection hole 111. That is to say, by providing the elastic flow guide component 122, the impact force during injection can be controlled by controlling the flow rate and volume for injecting the electrolyte, thereby indirectly controlling the protruding degree of the third surface 122a toward the first surface 11a, that is, indirectly controlling the angle between the flow guide direction of the electrolyte on the third surface 122a and the axial direction of the first liquid injection hole 111 to further adjust the spraying distance of the electrolyte, so that the electrolyte can be dispersed, guided, and dripped evenly onto the various positions of the bare cell according to the needs of the product, such as the size of the bare cell, which facilitates more even and rapid infiltration of the bare cell and speeds up the infiltration time.

Furthermore, in the related art, in order to improve the liquid injection effect, it is generally necessary to control the consistency of the flow rate and volume of the liquid injection to avoid inconsistent injection flow rate and volume from having a negative impact on the liquid injection effect. However, the inconsistent injection flow and flow rate can bring beneficial injection effects, further reduce the operating accuracy of the operator and improve production efficiency.

In an alternative embodiment, the projection of the elastic flow guide component 122 on the first surface 11 covers the entire first liquid injection hole 111, so that the electrolyte injected through the first liquid injection hole 111 can be dispersed and guided along the third surface 122a the elastic flow guide component 122 as much as possible, to make the electrolyte be more dispersed and ejected from the edge of the elastic flow guide component 122, thereby ensuring that the electrolyte can flow to the position of the bare cell farther away from the first liquid injection hole 111, which facilitates to accelerate the time for the electrolyte to infiltrate the bare cell and improve the absorption efficiency of the electrolyte by the bare cell.

In some embodiments, the elastic flow guide component 122 may be a solid of revolution structure. The center of the third surface 122a of the elastic flow guide component 122 is arched toward the first surface 11a, and the center of the fourth surface 122b is recessed toward the third surface 122a to form the recessed portion 1221. In this way, the third surface 122a can be configured as a rotating surface with the center arched toward the first surface 11a, and the fourth surface 122b can be configured as a rotating surface with the center recessed toward the third surface 122a, and it can also ensure that the centers of the third surface 122a and the fourth surface 122b are arranged relative to each other so as to ensure that the elastic flow guide component 122 deforms from the top close to the first surface 11a to the direction away from the first surface 11a, so that the elastic flow guide component 122 can still maintain the third surface 122a to be a convex shape toward the first surface 11a even if the elastic flow guide component 122 is impacted by the electrolyte and deforms, thereby ensuring that the third surface 122a can always play a role in guiding flow.

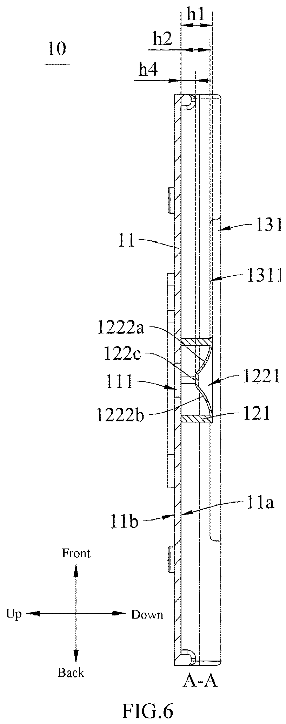

In some embodiments, as shown in FIGS. 5 and 6, the third surface 122a and the fourth surface 122b are arranged parallel to each other. This can ensure that the thickness of any position of the elastic flow guide component 122 is consistent, so as to avoid the thickness of a certain position being too thin, which may lead to rupture when impacted by the electrolyte, and to avoid the thickness of a certain position being too thick, which may make it difficult to deform when impacted by the electrolyte, resulting in poor flow guiding effect of the elastic flow guide component. That is, by arranging the third surface 122a and the fourth surface 122b parallel to each other, the structural strength of the elastic flow guide component 122 can be ensured while also facilitating the elastic flow guide component 122 to deform when impacted by the electrolyte, thereby adjusting the spraying distance of the electrolyte and improving the uniformity of liquid injection.

In some embodiments, the elastic flow guide component 122 may be a sheet-like structure. For example, the elastic flow guide component 122 may be an elastic piece. In other embodiments, the material of the elastic flow guide component 122 may be, but is not limited to, a material such as rubber, silicone, foam or plastic that has the ability to elastically deform and recover the deformation.

In an alternative embodiment, the elastic flow guide component 122 is made of rubber, and the elastic modulus E of the elastic flow guide component 122 can be 0.00584GPa~0.00984GPa. For example, E=0.00584GPa, 0.00600GPa, 0.00684GPa, 0.00700GPa, 0.00784GPa, 0.00800GPa, 0.00884GPa, 0.00900GPa or 0.00984GPa, etc. By controlling the elastic modulus of the elastic flow guide component 122 within the above range, it can be ensured that the elastic flow guide component 122 easily produces sufficient deformation when impacted by the electrolyte, thereby facilitating indirect control of the protruding degree of the third surface 122a toward the first surface 11a by controlling the injection flow rate and volume of the electrolyte to control the impact force during liquid injection, so as to adjust the spraying distance of the electrolyte, and thus the electrolysis can be dispersed, guided, and dripped evenly onto the various positions of the bare cell according to the needs of the product, such as the size of the bare cell, thereby improving the infiltration effect.

Further, the Poisson's ratio of the elastic flow guide component 122 is µ=0.27~0.67, for example, µ=0.27, 0.30, 0.35, 0.38, 0.40, 0.45, 0.50, 0.55, 0.60, 0.65 or 0.67, etc. By controlling the Poisson's ratio of the elastic flow guide component 122 within the above range, it can be ensured that the elastic flow guide component 122 deforms from the top close to the first surface 11a to a direction away from the first surface 11a, so that the elastic flow guide component 122 can still maintain the shape of the third surface 122a convex toward the first surface 11a even after being deformed by the impact of the electrolyte, thereby ensuring that the third surface 122a can always play a role in guiding flow.

In some embodiments, as shown in FIG. 5, the first liquid injection hole 111 is usually located on one side of the lower plastic part 11. That is, the center 01 of the first liquid injection hole 111 and the center O2 of the lower plastic part 11 are usually arranged eccentrically (the center 01 of the first liquid injection hole 111 and the center O2 of the lower plastic part 11 are arranged non-axially (or non-concentrically)), in order to avoid other structures. For example, when the lower plastic structure 10 is applied to the end cover assembly of a cylindrical battery, the installation position of the pole is usually set at the geometric center of the end cover plate and the lower plastic part 11, and thus the first liquid injection hole 111 is usually located on either side of the installation position of the pole to avoid the installation position of the pole. When the lower plastic structure 10 is applied to the end cover assembly of a square battery, the installation position of the explosion-proof valve is usually set at the geometric center of the end cover plate and the lower plastic part 11, and thus the first liquid injection hole 111 is usually located on either side of the installation position of the explosion-proof valve, to avoid the installation position of the explosion-proof valve.

In some embodiments, as shown in FIGS. 2, 3, 5 and 6, the intersection line of the third surface 122a intersepted by the plane where its central rotation axis is located is a curve, and the curve includes a first line segment 1222a and a second line segment 1222b. The first line segment 1222a and the second line segment 1222b are symmetrical about the central rotation axis of the third surface 122a. The curvatures of the first line segment 1222a and the second line segment 1222b gradually decrease along a direction from a position close to the first surface 11a to a position away from the first surface 11a. The smaller the curvatures of the first line segment 1222a and the second line segment 1222b, the more gentle the edge area of the third surface 122a that is farther away from the first surface 11a, and the greater the angle between the flow guide direction of the electrolyte on the edge area of the third surface 122a and the axial direction of the first liquid injection hole 111, which facilitates the electrolyte to be sprayed farther, thereby facilitating the electrolyte to be sprayed to the position of the bare cell farther away from the first liquid injection hole 111 to improve overall injection uniformity.

In some embodiments, as shown in FIGS. 2, 5 and 6, the shape of the lower plastic part 11 is square, e.g., square or rectangular. An explosion-proof valve fence 13 protrudes from the middle of the first surface 11a. The explosion-proof valve fence 13 extends along the first direction, and a groove 131 is provided in the middle of the explosion-proof valve fence 13. The groove 131 penetrates both sides of the explosion-proof valve fence 13 in the second direction, where the first direction and the second directions are both parallel to the first surface 11a, and the first direction and the second direction are perpendicular to each other. For example, the first direction can be the up-and-down direction in FIGS. 2 and 5, and the second direction can be the front- and-back direction in FIGS. 2 and 5. In a direction of the first surface 11a toward the elastic flow guide component 122, for example, in the up-and-down direction in FIGS. 2 and 6, a surface of the elastic flow guide component 122 away from the first surface 11a is higher than the groove bottom surface 1311 of the groove 131, or a surface of the elastic flow guide component 122 away from the first surface 11a is flush with the groove bottom surface 1311 of the groove 131, that is, the distance h1 from a surface of the elastic flow guide component 122 away from the first surface 11a to the first surface 11a is greater than or equal to the distance h2 from the groove bottom surface 1311 to the first surface 11a to ensure that the electrolyte can pass through the groove 131 in the middle of the explosion-proof valve fence 13 and flow to the position of the lower plastic part 11 farther away from the first liquid injection hole 111, so that the electrolyte can flow to the position of the bare cell farther away from the first liquid injection hole 111, and thus the electrolyte can be dispersed, guided and dripped evenly onto various positions of the bare cell, which facilitates a more uniform and rapid infiltration of the bare cell.

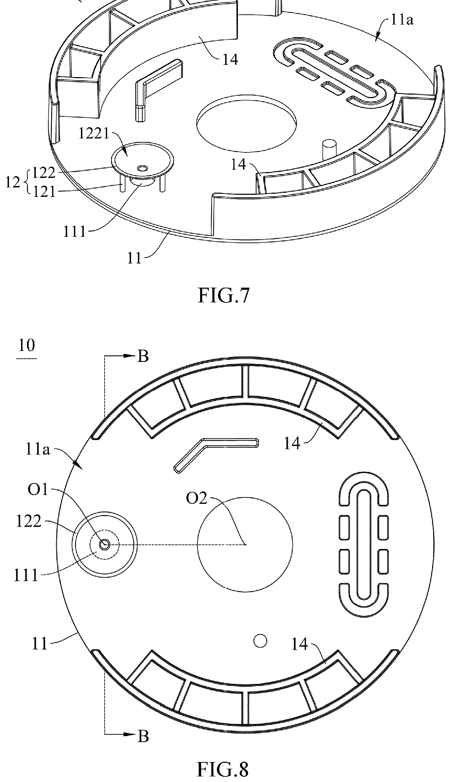

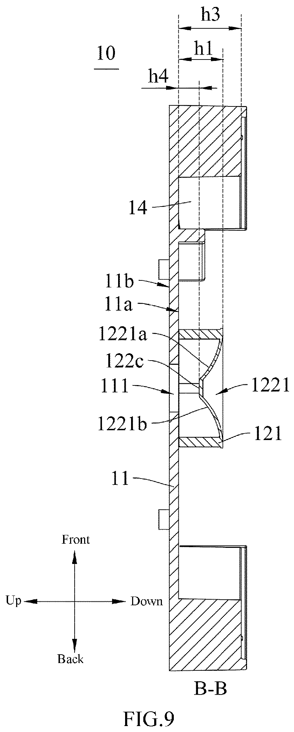

In some embodiments, as shown in FIGS. 7 to 9, the shape of the lower plastic part 11 is circular, and an arc-shaped support fence 14 protrudes from the edge of the first surface 11a. In the direction of the first surface 11a toward the elastic flow guide component 122, such as the up-and-down direction in FIG. 9, a surface of the elastic flow guide component 122 away from the first surface 11a is lower than a surface of the arc-shaped support fence 14 away from the first surface 11a. That is, the distance h1 from a surface of the elastic flow guide component 122 away from the first surface 11a to the first surface 11a is less than the height h3 of the protruding of the arc-shaped support fence 14 relative to the first surface 11a, so that the fourth surface 122b of the elastic flow guide component 122 can be spaced apart from the body of the collecting plate, leaving a gap to facilitate liquid leakage.

After research, it is found that if the third surface 122a is close to the first liquid injection hole 111, the path space for the electrolyte dripping from the first liquid injection hole 111 will be narrow, and the phenomenon of anti-bubbling of the electrolyte will easily occur. Since the electrolyte is affected by surface tension, and part of the electrolyte will adhere to the first surface 11a of the lower plastic part 11 and flow from the first surface 11a, if the third surface 122a is far away from the first liquid injection hole 111, the path space for the electrolyte dripping from the injection hole 111 is relatively wide, and most of the electrolyte adheres to the first surface 11a of the lower plastic part 11 and flows from the first surface 11a, so that the third surface 122a has a low diversion effect for the electrolyte, which is not conducive to more even and rapid infiltration of the bare cell. Therefore, in some embodiments, as shown in FIGS. 6 and 9, the third surface 122a has a central area 122c closest to the first liquid injection hole 111. Along the axis direction of the first liquid injection hole 111 (for example, in the up-and-down direction of FIGS. 6 and 9), the distance h4 between the central area 122c of the third surface 122a and the first liquid injection hole 111 is 1mm~2.5mm, for example, 1mm, 1.2mm, 1.5mm, 1.8mm, 2mm, 2.2mm, 2.3mm or 2.5mm, etc. On the one hand, the third surface 122a is avoided to be too close to the first liquid injection hole 111, thereby avoiding the phenomenon of anti-bubbling and ensuring normal liquid injection. On the other hand, the third surface 122a is avoided to be too far away from the first liquid injection hole 111 to ensure that the third surface 122a can divert most of the electrolyte, so that the electrolyte can be better dispersed and guided to various positions of the bare cell, so as to facilitate more even and rapid infiltration of the bare cell.

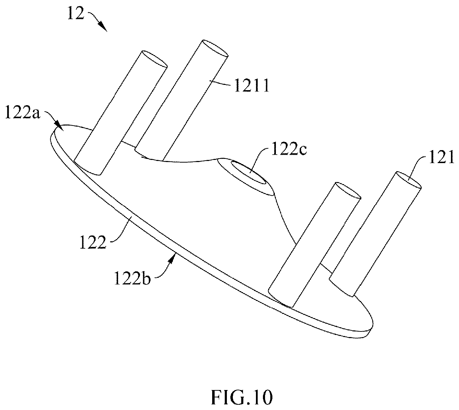

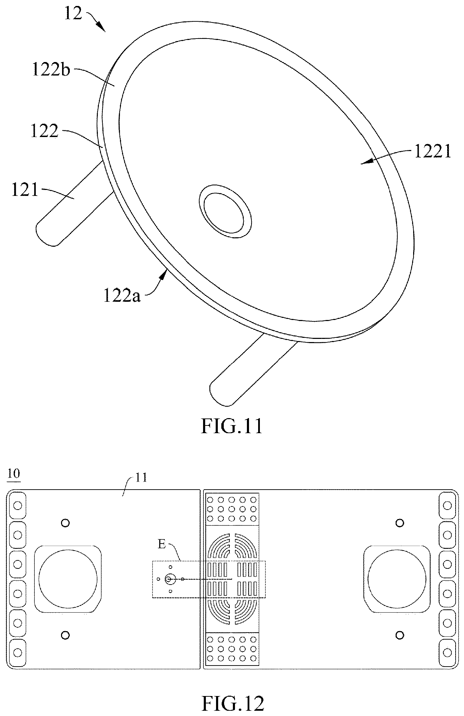

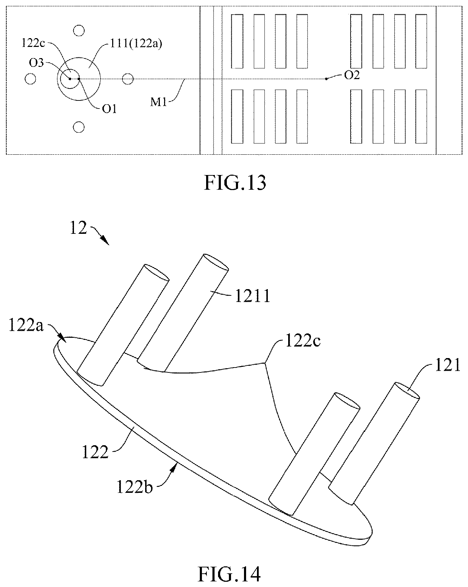

In one example, as shown in FIGS. 10 to 13, the central area 122c of the third surface 122a may be an end surface. In another example, as shown in FIGS. 14 to 16, the center area 122c of the third surface 122a may be a protruding point.

As an optional embodiment, when the central area 122c of the third surface 122a is an end surface, referring to FIGS. 10 to 13, the center of the central area 122c can be understood as the center O3 of the end surface. The center O3 of the central area 122c and the center 01 of the first liquid injection hole 111 may be arranged coaxially or eccentrically. It can be understood that when the center O3 of the central area 122c is coaxially arranged with the center 01 of the first liquid injection hole 111, it can be ensured that the electrolyte drops can hit the central area 122c of the third surface 122a, so that the electrolyte dripping onto the third surface 122a are dispersed from the central area 122c, and can substantially flow uniformly to various positions along the third surface 122a. However, since the center 01 of the first liquid injection hole 111 and the center O2 of the lower plastic part 11 usually arranged eccentrically, in order to achieve uniform liquid injection, more electrolyte needs to flow to the center of the bare cell and to the side of the bare cell away from the first liquid injection hole 111. Therefore, it is preferred that the center O3 of the central area 122c is set eccentric to the center O2 of the lower plastic part 11, and the center 01 of the liquid injection hole 111 is located between the center O3 of the central area 122c and the center O2 of the lower plastic part 11. That is, the center O3 of the central area 122c is located at a side of the center 01 of the first liquid injection hole 111 away from the center O2 of the lower plastic part 11, so that more electrolyte can be directly dripped onto the area of a side of the third surface 122a close to the center O2 of the lower plastic part 11, and flows to the center of the bare cell and a side of the bare cell away from the first liquid injection hole 111 along the area on the side of the third surface 122a close to the center O2 of the lower plastic part 11, thereby allowing more electrolyte to flow to the center of the bare cell and the side of the bare cell away from the first liquid injection hole 111 to improve the uniformity of the overall liquid injection.

In this embodiment, the center O3 of the central area 122c is eccentrically arranged with the center 01 of the first liquid injection hole 111, and the center O3 of the central area 122c is located at a side of the center 01 of the first liquid injection hole 111 away from the center O2 of the lower plastic part 11. If the distance between the center O3 of the central area 122c and the center 01 of the first liquid injection hole 111 is relatively large, then the electrolyte injected from the first liquid injection hole 111 may not hit the central area of the third surface 122a during liquid injection, resulting in poor deformation effect of the elastic flow guide component 122 and poor control effect of the electrolyte spraying distance. If the distance between the center 03 of the central area 122c and the center 01 of the first liquid injection hole 111 is relatively large, then most of the electrolyte injected from the first liquid injection hole 111 will directly flow to the side of the bare cell away from the first liquid injection hole 111 toward the area on the side of the third surface 122a close to the center O2 of the lower plastic part 11, which causes the electrolyte to be concentrated and guided to the side of the bare cell away from the first liquid injection hole 111, and thus it is prone to have the problem of poor uniformity of liquid injection and the infiltration time of the bare cell is increased. Therefore, in some embodiments, the projection of the central area 122c of the third surface 122a on the first surface 11a is located in the first liquid injection hole 111 to ensure that the electrolyte drops can hit the central area 122c of the third surface 122a, so that the degree of deformation of the elastic flow guide component 122 can be controlled by adjusting the impact force during liquid injection, so as to adjust the angle between the flow guide direction of the electrolyte on the third surface 122a and the axial direction of the first liquid injection hole 111. Therefore, the spraying distance of the electrolyte can be adjusted, in order to meet the infiltration requirements of bare cells of different sizes. At the same time, it can also improve the uniformity of the overall liquid injection.

In some embodiments, the center O1 of the first liquid injection hole 111 and the center O2 of the lower plastic part 11 are connected to form a central connection line M1. The lower plastic part 11 on both sides of the central connection line M1 are symmetrical about the central connection line M1. The projection of the center O3 of the central area 122c on the first surface 11a is located on the central connection line M1. This can prevent the center O3 of the central area 122c from being biased toward either side of the central connection line M1. The electrolyte can be dispersed and evenly guided to both sides of the central connection line M1, so that the electrolyte can be better dispersed and dripped evenly to various positions of the bare cell, facilitating the bare cell to be infiltrated more evenly and quickly.

As another optional embodiment, when the central area 122c of the third surface 122a is a protruding point, as shown in FIGS. 14 to 16, the protruding point constitutes the center of the central area 122c, and the protruding point is set coaxially or eccentrically with the center 01 of the first liquid injection hole 111. It can be understood that when the protruding point is set coaxially with the center 01 of the first liquid injection hole 111, it can ensure that the electrolyte drops can hit the protruding point of the third surface 122a, thereby causing the electrolyte dripping onto the third surface 122a starts to disperse from the position of the protruding point and can substantially flow evenly to various positions along the third surface 122a. However, since the center 01 of the first liquid injection hole 111 and the center O2 of the lower plastic part 11 are usually arranged eccentrically, in order to achieve uniform liquid injection, more electrolyte needs to flow to the center of the bare cell and to the side of the bare cell away from the first liquid injection hole 111. Therefore, it is preferred that the protruding point is eccentrically arranged with the center 01 of the first liquid injection hole 111, and the center 01 of the first liquid injection hole 111 is located between the protruding point and the center O2 of the lower plastic part 11, that is, the protruding point is located on the side of the center 01 of the first liquid injection hole 111 away from the center O2 of the lower plastic part 11. This allows more electrolyte to drip directly onto the area on the side of the third surface 122a close to the center O2 of the lower plastic part 11, and flow to the center of the bare cell and to the side of the bare cell away from the first liquid injection hole 111 along the area of a side of the third surface 122a close to the center O2 of the lower plastic part 11, so that more electrolyte flows to the center of the bare cell, and the side of the bare cell away from the first liquid injection hole 111, and improving the uniformity of the overall liquid injection.

In this embodiment, the protruding point is eccentrically arranged with the center 01 of the first liquid injection hole 111, and the protruding point is located on a side of the center 01 of the first liquid injection hole 111 away from the center O2 of the lower plastic part 11. If the distance between the protruding point and the center 01 of the first liquid injection hole 111 is relatively large, then the electrolyte injected from the first liquid injection hole 111 may not hit the protruding point during liquid injection, resulting in poor deformation effect of the elastic flow guide component 122 and poor control effect of the electrolyte spraying distance. If the distance between the protruding point and the center 01 of the first liquid injection hole 111 is relatively large, then most of the electrolyte injected from the first liquid injection hole 111 will directly flow to the side of the bare cell away from the first liquid injection hole 111 toward the area on the side of the third surface 122a close to the center O2 of the lower plastic part 11, which causes the electrolyte to concentrated and guided to the side of the bare cell away from the first liquid injection hole 111, and thus it is prone to have the problem of poor uniformity of liquid injection and the infiltration time of the bare cell is increased. Therefore, in some embodiments, the projection of the protruding point on the first surface 11a is located in the first liquid injection hole 111 to ensure that the electrolyte drops can hit the protruding point, so that degree of the deformation of the elastic flow guide component 122 can be controlled by adjusting the impact force during liquid injection, so as to adjust the angle between the flow guide direction of the electrolyte on the third surface 122a and the axis direction of the first liquid injection hole 111. Therefore, the spraying distance of the electrolyte can be adjusted, in order to meet the infiltration requirements of bare cells of different sizes.

In some embodiments, the center O1 of the first liquid injection hole 111 and the center O2 of the lower plastic part 11 are connected to form a central connection line M1. The lower plastic part 11 on both sides of the central connection line M1 are symmetrical with respect to the central connection line M1. The projection of the protruding point on the first surface 11a is located on the central connection line M1. This can prevent the protruding points from being biased toward either side of the central connection line M1. The electrolyte can be dispersed and evenly guided to both sides of the central connection line M1, so that the electrolyte can be better dispersed and dripped evenly to various positions of the bare cell, facilitating the bare cell to be infiltrated more evenly and quickly.

In some embodiments, there are multiple connection components 121, such as two, three, four, five or more. The multiple connection components 121 are respectively connected to the first surface 11a of the lower plastic part 11, and the multiple connection components 121 are respectively connected to the elastic flow guide components 122. In this way, there are at least two connection positions between the elastic flow guide component 122 and the lower plastic part 11, thereby facilitating the connection stability between the elastic flow guide component 122 and the lower plastic part 11. Moreover, the heights of the respective connection components 121 in the axial direction of the first liquid injection hole 111 are the same. If the heights of the respective connection components 121 in the axial direction of the first liquid injection hole 111 are different, the elastic flow guide component 122 will deform or even twist before being impacted by the electrolyte, affecting the structural strength and stability of the elastic flow guide component 122. By keeping the heights of all the connection components 121 in the axial direction of the first liquid injection hole 111 the same, it can prevent the elastic flow guide component 122 from deforming or even twisting before being impacted by the electrolyte, thereby ensuring the structural stability of the elastic flow guide component 122.

In an alternative embodiment, there are three connection components 121. The connection components 121 are equivalent to blocking components. Too many connection components 121 will affect the injection efficiency of the electrolyte, and too few connection components 121 will affect the connection stability of the elastic flow guide component 122. Therefore, providing three connection components 121 can ensure the injection efficiency of the electrolyte and at the same time ensure the connection stability of the elastic flow guide component 122.

Further, the multiple connection components 121 may be evenly spaced along the circumferential direction of the first liquid injection hole 111 on the edge of the first liquid injection hole 111 so that the distance between any two adjacent connection components 121 remains equal. In this way, the force on the elastic flow guide component 122 can be relatively uniform. When the liquid is injected, the elastic flow guide component 122 will not be deflected, so as to avoid concentratedly guiding the electrolyte on a certain position of the bare cell, thereby ensuring the overall uniformity of the liquid injection.

In some embodiments, the connection component 121 is provided with a flow guide surface 121 toward the center of the elastic flow guide component 122, where the flow guide surface 1211 is a flow guide arc surface or a flow guide slope, and the flow guide surface 1211 can be used for guiding the electrolyte injected through the first liquid injection hole 111. The arrangement of the flow guide surface 1211 on the connection component 121 allows the electrolyte to use the flow guide surface 1211 for secondary shunting and guiding, which is beneficial to further improving the injection efficiency of the electrolyte.

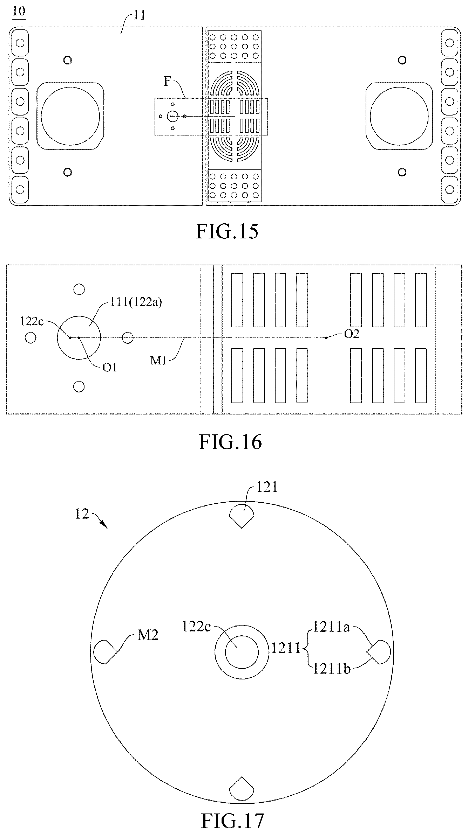

For example, the connection component 121 may be a strip structure or a columnar structure, such as a cylindrical structure. In this case, the outer peripheral side of the connection component 121 may be an arc surface, and the outer peripheral side of the connection component 121 forms the flow guide arc surface. There is no need to cut the connection component 121, and the structure of the connection component 121 is relatively simple. When the flow guide surface 1211 is a flow guide slope, as shown in FIGS. 16 and 17, the flow guide slope includes a first flow guide sub-slope 1211a and a second flow guide sub-slope 1211b connected at an angle. The intersection line M2 of the first flow guide sub-slope 1211a and the second flow guide sub-slope 1211b is parallel to the axis of the first liquid injection hole 111, and the first flow guide sub-slope 1211a and the second flow guide sub-slope 1211b are symmetrical about a plane where the intersection line M2 and the first liquid injection hole are located, so that the electrolyte can be dispersed from the position of the intersection line M2, and can substantially flow evenly to various positions along the first flow guide sub-slope 1211a and the second flow guide sub-slope 1211b.

As an optional embodiment, the connection component 121 and the lower plastic part 11 are integrally formed. For example, the connection component 121 and the lower plastic part 11 can be integrally formed by injection molding, which can shorten the processing time, simplify the installation process, and improve the installation efficiency. During the injection molding process, the connection between the connection component 121 and the lower plastic part 11 is usually fused and connected together, therefore the connection reliability and stability between the connection component 121 and the lower plastic part 11 are relatively high.

As another optional embodiment, the connection component 121 is hot-melt connected to the lower plastic part 11. The installation method is relatively simple, and compared with traditional mechanical fastening (riveting, screwing, etc.), the hot-melt connection makes it possible to fuse the joint between the connection component 121 and the lower plastic part 11 together, with high connection strength, and the overall mass of the lower plastic structure 10 after installation is lighter, which is beneficial to the lightweight design of the lower plastic structure 10.

As another optional embodiment, the connection component 121 is detachably connected to the lower plastic part 11. For example, the connection component 121 and the lower plastic part 11 can be snap-connected, so that the connection component 121 can be detached from the lower plastic part 11, and thus the flow guide 12 can be detached from the lower plastic part 11. Therefore, when the elasticity of the elastic flow guide component 122 fails, the flow guide 12 can be removed and replaced with a new one instead of replacing the entire lower plastic structure 10, thereby helping to reduce replacement costs.

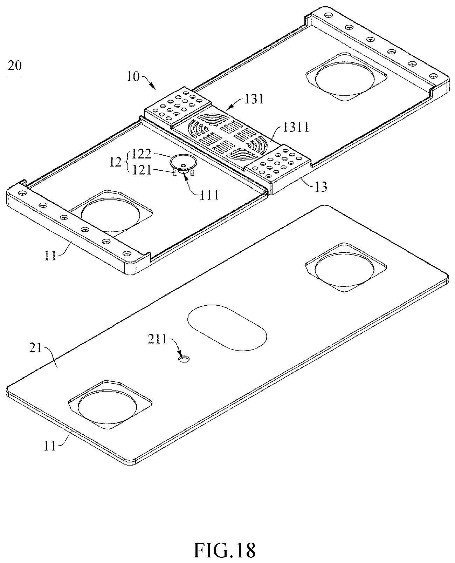

Referring to FIG. 18, a second aspect of the present disclosure discloses an end cover assembly. The end cover assembly 20 includes an end cover plate 21 and a lower plastic structure 10 as described in the first aspect. The lower plastic part 11 of the lower plastic structure 10 is connected to the end cover plate 21. The flow guide 12 is located on the side of the lower plastic part 11 away from the end cover plate 21. The end cover plate 21 is provided with a second liquid injection hole 211 connected to the first liquid injection hole 111. It can be understood that the end cover assembly 20 having the lower plastic structure 10 described in the first aspect can bring the same or similar beneficial effects. For details, please refer to the description of the embodiment of the lower plastic structure 10, which will not be repeated here.

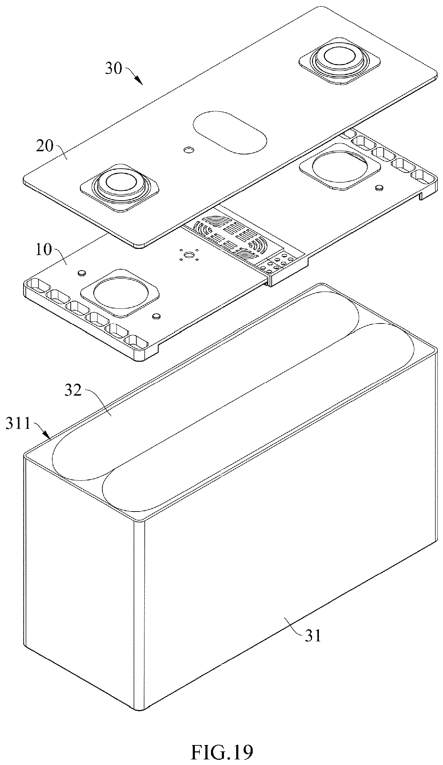

Referring to FIG. 19, a third aspect of the present disclosure discloses an energy storage device. The energy storage device 30 has a casing 31, a bare cell 32 and an end cover assembly 20 as described in the second aspect. The casing 31 has an opening 311. The bare cell 32 is arranged in the casing 31. The end cover plate 21 is sealingly connected to the opening 311. The lower plastic structure 10 faces toward the bare cell 32. It can be understood that the energy storage device 30 having the end cover assembly 20 described in the second aspect can bring the same or similar beneficial effects. For details, please refer to the description of the embodiment of the lower plastic structure 10, which will not be repeated here.

The energy storage device 30 may include but is not limited to a single cell, a battery module, a battery pack, a battery system, etc. When the energy storage device 30 is a single battery, it can be a square battery or a circular battery.

A fourth aspect of the present disclosure discloses an electrical equipment, which includes an energy storage device as described in the third aspect. The technical solutions of the embodiments of this application are applicable to various electrical equipment using the energy storage device, such as a battery powered vehicle, an electric toy, an electric tool, an electric vehicle, ship and spacecraft, a mobile phone, a portable device, a handheld computer or a notebook computer, etc.

The lower plastic structure, end cover assembly, energy storage device and electrical equipment disclosed in the embodiments of the present disclosure have been introduced in detail. Specific examples are used herein to illustrate the principles and implementation methods of the present disclosure. The description of the above embodiments is only used to help understand the lower plastic structure, end cover assembly, energy storage device and electrical equipment of the present disclosure and core ideas thereof. At the same time, for those of ordinary skill in the art, based on the ideas of the present disclosure, there may be changes in the specific implementation and the scope of application. In summary, the content of this specification should not be construed as a limitation of the present disclosure.

## Claims

1. A lower plastic structure, comprising:
a lower plastic part (11), wherein the lower plastic part (11) has a first surface (11a) and a second surface (11b) facing away from the first surface (11a), and the lower plastic part (11) is provided with a first liquid injection hole (111) penetrating the first surface (11a) and the second surface (11b); and
a flow guide (12), wherein the flow guide (12) comprises a connection component (121) and an elastic flow guide component (122), the connection component (121) is connected to the first surface (11a), and the elastic flow guide component (122) is connected to the connection component (121) and there is a gap between the elastic flow guide component (122) and the first liquid injection hole (111), and a projection of the elastic flow guide component (122) on the first surface (11a) at least covers part of the first liquid injection hole (111), the elastic flow guide component (122) has a third surface (122a) facing toward the first surface (11a) and a fourth surface (122b) facing away from the third surface (122a), the third surface (122a) protrudes toward the first surface (11a), and the third surface (122a) is configured to guide an electrolyte injected through the first liquid injection hole (111), and the fourth surface (122b) is recessed toward the third surface (122a) to form a recessed portion (1221),
wherein the elastic flow guide component (122) is able to produce different degrees of deformations according to different impact forces of the electrolyte.

2. The lower plastic structure according to claim 1, wherein the elastic flow guide component (122) is a solid of revolution structure, and a center of the third surface (122a) is provided arched towards the first surface (11a), and a center of the fourth surface (122b) is recessed toward the third surface (122a) to form the recessed portion (1221).

3. The lower plastic structure according to claim 2, wherein the third surface (122a) and the fourth surface (122b) are arranged parallel to each other.

4. The lower plastic structure according to claim 2, wherein a intersection line of the third surface (122a) intercepted by a plane where a central rotation axis of the elastic flow guide component (122) is located is a curve, the curve comprises a first line segment (1222a) and a second line segment (1222b) which are symmetrical about the central rotation axis of the third surface (122a), curvatures of the first line segment (1222a) and the second line segment (1222b) gradually decrease along a direction from a position close to the first surface (11a) to a position away from the first surface (11a).

5. The lower plastic structure according to claim 1, wherein the elastic flow guide component (122) is made of rubber, and an elastic modulus E of the elastic flow guide component (122) is 0.00584GPa~0.00984GPa, and/or,
wherein a Poisson's ratio of the elastic flow guide component (122) is µ = 0.27~0.67.

6. The lower plastic structure according to claim 1, wherein the third surface (122a) has a central area (122c) closest to the first liquid injection hole (111), and a center of the central area (122c) is eccentrically arranged with a center of the first liquid injection hole (111), and the center of the first liquid injection hole (111) is located between the center of the central area (122c) and a center of the first surface (11a) of the lower plastic part (11).

7. The lower plastic structure according to claim 6, wherein a projection of the central area (122c) on the first surface (11a) is located in the first liquid injection hole (111).

8. The lower plastic structure according to claim 6, wherein the center of the first liquid injection hole (111) and the center of the lower plastic part (11) are connected to form a central connection line (M1), and the lower plastic part (11) on both sides of the central connection line (M1) are symmetrical about the central connection line (M1); and
a projection of the center of the central area (122c) on the first surface (11a) is located on the central connection line (M1).

9. The lower plastic structure according to claim 1, wherein the third surface (122a) has a central area (122c) closest to the first liquid injection hole (111), and a distance between the central area (122c) of the third surface (122a) and the first liquid injection hole (111) along an axial direction of the first liquid injection hole (111) is 1mm~2.5mm.

10. The lower plastic structure according to claim 1, wherein a shape of the lower plastic part (11) is square, and an explosion-proof valve fence (13) protrudes from middle of the first surface (11a), the explosion-proof valve fence (13) extends along a first direction, a groove (131) is provided in middle of the explosion-proof valve fence (13), and the groove (131) penetrates both sides of the explosion-proof valve fence (13) in a second direction, the first direction and the second direction are both parallel to the first surface (11a), the first direction and the second direction are perpendicular to each other, and a distance from a surface of the elastic flow guide component away from the first surface (11a) to the first surface (11a) is greater than or equal to a distance from a groove bottom surface (1311) of the groove (131) to the first surface (11a); or,
a shape of the lower plastic part (11) is circular, and an arc-shaped support fence (14) protrudes from an edge of the first surface (11a), and a distance from a surface of the elastic flow guide component (122) away from the first surface (11a) to the first surface (11a) is less than a height of protruding of the arc-shaped support fence (14) relative to the first surface (11a).

11. The lower plastic structure according to claim 1, wherein there are multiple connection components (121), and the multiple connection components (121) are connected to the first surface (11a), and the multiple connection components (121) are connected to the elastic flow guide component (122), and heights of the connection components (121) in an axial direction of the first liquid injection hole (111) are same,
preferably, wherein the multiple connection components (121) are evenly spaced along a circumferential direction of the first liquid injection hole (111) on an edge of the first liquid injection hole (111).

12. The lower plastic structure according to any one of claims 1 to 11, wherein the connection component (121) is provided with a flow guide surface (1211) toward a center of the elastic flow guide component (122), and the flow guide surface (1211) is configured to guide an electrolyte injected through the first liquid injection hole (111),
preferably, the flow guide surface (1211) is a flow guide slope, the flow guide slope comprises a first flow guide sub-slope (1211a) and a second guide sub-slope (1211b), the first flow guide sub-slope (1211a) and the second guide sub-slope (1211b) are connected at an angle, an intersection line of the first guide sub-slope (1211a) and the second guide sub-slope (1211b) is parallel to an axis of the first liquid injection hole (111), the first flow guide sub-slope (1211a) and the second flow guide sub-slope (1211b) are symmetrical about a plane where the intersection line and the axis of the first liquid injection hole (111) are located;
or preferably, the flow guide surface (1211) is a flow guide curved surface.

13. An end cover assembly (20), comprising:
an end cover plate (21); and
a lower plastic structure (10) according to any one of claims 1 to 12, the lower plastic part (11) of the lower plastic structure (10) is connected to the end cover plate (21), and the flow guide (12) is located on a side of the lower plastic part (11) away from the end cover plate (21), the end cover plate (21) is provided with a second liquid injection hole (211) connected to the first liquid injection hole (111).

14. An energy storage device (30), comprising:
a casing (31), a bare cell (32) and an end cover assembly (20) according to claim 13, the casing (31) has an opening (311), the bare battery core (32) is arranged in the casing (31), and the end cover plate (21) of the end cover assembly (20) is sealingly connected to the opening (311) and the lower plastic structure (10) is arranged toward the bare cell (32).

15. An electrical equipment comprising an energy storage device (30) according to claim 14.

## Patentansprüche

1. Untere Kunststoffstruktur, umfassend:
ein unteres Kunststoffteil (11), wobei das untere Kunststoffteil (11) eine erste Oberfläche (11a) und eine zweite Oberfläche (11b) aufweist, die von der ersten Oberfläche (11a) weg zeigt, und das untere Kunststoffteil (11) mit einem ersten Flüssigkeitseinspritzloch (111) versehen ist, das die erste Oberfläche (11a) und die zweite Oberfläche (11b) durchdringt; und
eine Strömungsführung (12), wobei die Strömungsführung (12) eine Verbindungskomponente (121) und eine elastische Strömungsführungskomponente (122) umfasst, wobei die Verbindungskomponente (121) mit der ersten Oberfläche (11a) verbunden ist und die elastische Strömungsführungskomponente (122) mit der Verbindungskomponente (121) verbunden ist und zwischen der Verbindungskomponente (121) und der elastischen Strömungsführungskomponente (122) ein Spalt vorhanden ist, und ein Vorsprung der elastischen Strömungsführungskomponente (122) auf der ersten Oberfläche (11a) zumindest einen Teil des ersten Flüssigkeitseinspritzlochs (111) abdeckt, die elastische Strömungsführungskomponente (122) eine dritte Oberfläche (122a), die zur ersten Oberfläche (11a) hin ausgerichtet ist, und eine vierte Oberfläche (122b), die von der dritten Oberfläche (122a) weg ausgerichtet ist, aufweist, die dritte Oberfläche (122a) in Richtung der ersten Oberfläche (11a) vorsteht und die dritte Oberfläche (122a) so konfiguriert ist, dass sie einen durch das erste Flüssigkeitseinspritzloch (111) eingespritzten Elektrolyten führt, und die vierte Oberfläche (122b) in Richtung der dritten Oberfläche (122a) vertieft ist, um einen vertieften Bereich (1221) auszubilden,
wobei die elastische Strömungsführungskomponente (122) in der Lage ist, je nach unterschiedlichen Aufprallkräften des Elektrolyten unterschiedliche Verformungsgrade zu erzeugen.

2. Untere Kunststoffstruktur gemäß Anspruch 1, wobei die elastische Strömungsführungskomponente (122) eine Rotationskörperstruktur ist und ein Mittelpunkt der dritten Oberfläche (122a) zur ersten Oberfläche (11a) hin gewölbt vorgesehen ist und ein Mittelpunkt der vierten Oberfläche (122b) zur dritten Oberfläche (122a) hin vertieft ist, um den vertieften Bereich (1221) auszubilden.

3. Untere Kunststoffstruktur gemäß Anspruch 2, wobei die dritte Oberfläche (122a) und die vierte Oberfläche (122b) parallel zueinander angeordnet sind.

4. Untere Kunststoffstruktur gemäß Anspruch 2, wobei eine Schnittlinie der dritten Oberfläche (122a), die von einer Ebene geschnitten wird, in der sich eine zentrale Drehachse der elastischen Strömungsführungskomponente (122) befindet, eine Kurve ist, wobei die Kurve ein erstes Liniensegment (1222a) und ein zweites Liniensegment (1222b) umfasst, die symmetrisch zur zentralen Drehachse der dritten Oberfläche (122a) sind, wobei die Krümmungen des ersten Liniensegments (1222a) und des zweiten Liniensegments (1222b) entlang einer Richtung von einer Position nahe der ersten Oberfläche (11a) zu einer Position entfernt von der ersten Oberfläche (11a) allmählich abnehmen.

5. Untere Kunststoffstruktur gemäß Anspruch 1, wobei die elastische Strömungsführungskomponente (122) aus Gummi besteht und ein elastisches Modul E der elastischen Strömungsführungskomponente (122) 0,00584 GPa~0,00984 GPa beträgt und/oder
wobei eine Poissonzahl der elastischen Strömungsführungskomponente (122) µ = 0,27~0,67 beträgt.

6. Untere Kunststoffstruktur gemäß Anspruch 1, wobei die dritte Oberfläche (122a) einen mittleren Bereich (122c) aufweist, der dem ersten Flüssigkeitseinspritzloch (111) am nächsten liegt, und ein Mittelpunkt des mittleren Bereichs (122c) exzentrisch zu einem Mittelpunkt des ersten Flüssigkeitseinspritzlochs (111) angeordnet ist, und der Mittelpunkt des ersten Flüssigkeitseinspritzlochs (111) zwischen dem Mittelpunkt des mittleren Bereichs (122c) und einem Mittelpunkt der ersten Oberfläche (11a) des unteren Kunststoffteils (11) angeordnet ist.

7. Untere Kunststoffstruktur gemäß Anspruch 6, wobei sich ein Vorsprung des mittleren Bereichs (122c) auf der ersten Oberfläche (11a) in dem ersten Flüssigkeitseinspritzloch (111) befindet.

8. Untere Kunststoffstruktur gemäß Anspruch 6, wobei der Mittelpunkt des ersten Flüssigkeitseinspritzlochs (111) und der Mittelpunkt des unteren Kunststoffteils (11) verbunden sind, um eine zentrale Verbindungslinie (M1) auszubilden, und das untere Kunststoffteil (11) auf beiden Seiten der zentralen Verbindungslinie (M1) symmetrisch zur zentralen Verbindungslinie (M1) ist; und
sich ein Vorsprung des Mittelpunkts des mittleren Bereichs (122c) auf der ersten Oberfläche (11a) auf der mittleren Verbindungslinie (M1) befindet.

9. Untere Kunststoffstruktur gemäß Anspruch 1, wobei die dritte Oberfläche (122a) einen mittleren Bereich (122c) aufweist, der dem ersten Flüssigkeitseinspritzloch (111) am nächsten liegt, und ein Abstand zwischen dem mittleren Bereich (122c) der dritten Oberfläche (122a) und dem ersten Flüssigkeitseinspritzloch (111) entlang einer axialen Richtung des ersten Flüssigkeitseinspritzlochs (111) 1 mm~ 2,5 mm beträgt.

10. Untere Kunststoffstruktur gemäß Anspruch 1, wobei eine Form des unteren Kunststoffteils (11) quadratisch ist und ein explosionsgeschützter Ventilzaun (13) aus der Mitte der ersten Oberfläche (11a) herausragt, wobei sich der explosionsgeschützte Ventilzaun (13) entlang einer ersten Richtung erstreckt, in der Mitte des explosionsgeschützten Ventilzauns (13) eine Nut (131) vorgesehen ist, die Nut (131) beide Seiten des explosionsgeschützten Ventilzauns (13) in einer zweiten Richtung durchdringt, die erste Richtung und die zweite Richtung beide parallel zur ersten Oberfläche (11a) verlaufen, die erste Richtung und die zweite Richtung senkrecht zueinander stehen und ein Abstand von einer Oberfläche der elastischen Strömungsführungskomponente, die von der ersten Oberfläche (11a) entfernt ist, zu der ersten Oberfläche (11a) größer oder gleich einem Abstand von einer Nutbodenfläche (1311) der Nut (131) zu der ersten Oberfläche (11a) ist; oder
eine Form des unteren Kunststoffteils (11) kreisförmig ist und ein bogenförmiger Stützzaun (14) von einer Kante der ersten Oberfläche (11a) vorsteht, und ein Abstand von einer Oberfläche der elastischen Strömungsführungskomponente (122) weg von der ersten Oberfläche (11a) zur ersten Oberfläche (11a) geringer ist als eine Höhe des Vorsprungs des bogenförmigen Stützzauns (14) relativ zur ersten Oberfläche (11a).

11. Untere Kunststoffstruktur gemäß Anspruch 1, wobei mehrere Verbindungskomponenten (121) vorhanden sind, und die mehreren Verbindungskomponenten (121) mit der ersten Oberfläche (11a) verbunden sind, und die mehreren Verbindungskomponenten (121) mit der elastischen Strömungsführungskomponente (122) verbunden sind, und Höhen der Verbindungskomponenten (121) in einer axialen Richtung des ersten Flüssigkeitseinspritzlochs (111) gleich sind,
vorzugsweise wobei die mehreren Verbindungskomponenten (121) entlang einer Umfangsrichtung des ersten Flüssigkeitseinspritzlochs (111) an einer Kante des ersten Flüssigkeitseinspritzlochs (111) gleichmäßig beabstandet sind.

12. Untere Kunststoffstruktur gemäß einem der Ansprüche 1 bis 11, wobei die Verbindungskomponente (121) mit einer Strömungsführungsfläche (1211) in Richtung einer Mitte der elastischen Strömungsführungskomponente (122) versehen ist und die Strömungsführungsfläche (1211) so konfiguriert ist, dass sie einen eingespritzten Elektrolyten durch das erste Flüssigkeitseinspritzloch (111) führt,
vorzugsweise die Strömungsführungsfläche (1211) ein Strömungsführungsgefälle ist, das Strömungsführungsgefälle ein erstes Strömungsführungs-Teilgefälle (1211a) und ein zweites Führungs-Teilgefälle (1211b) umfasst, das erste Strömungsführungs-Teilgefälle (1211a) und das zweite Führungs-Teilgefälle (1211b) in einem Winkel miteinander verbunden sind, eine Schnittlinie der ersten Führungs-Teilgefälles (1211a) und des zweiten Führungs-Teilgefälles (1211b) parallel zu einer Achse des ersten Flüssigkeitseinspritzlochs (111) ist, das erste Strömungsführungs-Teilgefälle (1211a) und das zweite Strömungsführungs-Teilgefälle 1211b) symmetrisch zu einer Ebene sind, in der sich die Schnittlinie und die Achse des ersten Flüssigkeitseinspritzlochs (111) befinden;
oder vorzugsweise die Strömungsführungsfläche (1211) eine gekrümmte Strömungsführungsfläche ist.

13. Endabdeckanordnung (20), umfassend:
eine Endabdeckplatte (21); und
eine untere Kunststoffstruktur (10) gemäß einem der Ansprüche 1 bis 12, wobei das untere Kunststoffteil (11) der unteren Kunststoffstruktur (10) mit der Endabdeckplatte (21) verbunden ist und die Strömungsführung (12) sich auf einer Seite des unteren Kunststoffteils (11) befindet, die von der Endabdeckplatte (21) entfernt ist, die Endabdeckplatte (21) mit einem zweiten Flüssigkeitseinspritzloch (211) versehen ist, das mit dem ersten Flüssigkeitseinspritzloch (111) verbunden ist.

14. Energiespeichervorrichtung (30), umfassend:
ein Gehäuse (31), eine nackte Zelle (32) und eine Endabdeckanordnung (20) gemäß Anspruch 13, wobei das Gehäuse (31) eine Öffnung (311) aufweist, der nackte Batteriekern (32) in dem Gehäuse (31) angeordnet ist, und die Endabdeckplatte (21) der Endabdeckanordnung (20) dichtend mit der Öffnung (311) verbunden ist, und die untere Kunststoffstruktur (10) in Richtung der nackten Zelle (32) angeordnet ist.

15. Elektrische Ausrüstung umfassend eine Energiespeichervorrichtung (30) gemäß Anspruch 14.

## Revendications

1. Une structure en plastique inférieure, comprenant :
une partie inférieure en plastique (11), dans laquelle la partie inférieure en plastique (11) présente une première surface (11a) et une deuxième surface (11b) opposée à la première surface (11a), et la partie inférieure en plastique (11) est pourvue d'un premier trou d'injection de liquide (111) traversant la première surface (11a) et la deuxième surface (11b) ; et
un guide d'écoulement (12), dans lequel le guide d'écoulement (12) comprend un composant de connexion (121) et un composant de guide d'écoulement élastique (122), le composant de connexion (121) est connecté à la première surface (11a), et le composant de guidage d'écoulement élastique (122) est connecté au composant de connexion (121) et il existe un espace entre le composant de guidage d'écoulement élastique (122) et le premier trou d'injection de liquide (111), et une saillie du composant de guidage d'écoulement élastique (122) sur la première surface (11a) recouvre au moins une partie du premier trou d'injection de liquide (111), le composant de guidage d'écoulement élastique (122) comporte une troisième surface (122a) tournée vers la première surface (11a) et une quatrième surface (122b) tournée à l'opposé de la troisième surface (122a), la troisième surface (122a) fait saillie vers la première surface (11a), et la troisième surface (122a) est configurée pour guider un électrolyte injecté à travers le premier trou d'injection de liquide (111) , et la quatrième surface (122b) est en retrait vers la troisième surface (122a) pour former une partie en retrait (1221),
dans lequel le composant de guidage d'écoulement élastique (122) est capable de produire différents degrés de déformations en fonction de différentes forces d'impact de l'électrolyte.

2. Structure en plastique inférieure selon la revendication 1, dans laquelle le composant de guidage d'écoulement élastique (122) est une structure solide de révolution, et un centre de la troisième surface (122a) est prévu en forme d'arc vers la première surface (11a), et un centre de la quatrième surface (122b) est en retrait vers la troisième surface (122a) pour former la partie en retrait (1221).

3. Structure en plastique inférieure selon la revendication 2, dans laquelle la troisième surface (122a) et la quatrième surface (122b) sont disposées parallèlement l'une à l'autre.

4. Structure en plastique inférieure selon la revendication 2, dans laquelle une ligne d'intersection de la troisième surface (122a) interceptée par un plan où se trouve un axe de rotation central du composant de guidage d'écoulement élastique (122) est une courbe, la courbe comprend un premier segment de ligne (1222a) et un deuxième segment de ligne (1222b) qui sont symétriques par rapport à l'axe de rotation central de la troisième surface (122a), des courbures du premier segment de ligne (1222a) et du deuxième segment de ligne (1222b) diminuant progressivement dans une direction allant d'une position proche de la première surface (11a) à une position éloignée de la première surface (11a).

5. Structure en plastique inférieure selon la revendication 1, dans laquelle le composant de guidage d'écoulement élastique (122) est en caoutchouc, et un module d'élasticité E du composant de guidage d'écoulement élastique (122) est de 0,00584 GPa à 0,00984 GPa, et/ou
dans laquelle un coefficient de Poisson du composant élastique de guidage d'écoulement (122) est µ = 0,27 à 0,67.

6. Structure en plastique inférieure selon la revendication 1, dans laquelle la troisième surface (122a) comporte une zone centrale (122c) la plus proche du premier trou d'injection de liquide (111), et un centre de la zone centrale (122c) est disposé de manière excentrique par rapport au centre du premier trou d'injection de liquide (111), et le centre du premier trou d'injection de liquide (111) est situé entre le centre de la zone centrale (122c) et un centre de la première surface (11a) de la partie inférieure en plastique (11).

7. Structure en plastique inférieure selon la revendication 6, dans laquelle une projection de la zone centrale (122c) sur la première surface (11a) est située dans le premier trou d'injection de liquide (111).

8. Structure en plastique inférieure selon la revendication 6, dans laquelle le centre du premier trou d'injection de liquide (111) et le centre de la partie en plastique inférieure (11) sont reliés pour former une ligne de connexion centrale (M1), et la partie en plastique inférieure (11) des deux côtés de la ligne de connexion centrale (M1) est symétrique par rapport à la ligne de connexion centrale (M1) ; et
une projection du centre de la zone centrale (122c) sur la première surface (11a) est située sur la ligne de connexion centrale (M1).

9. Structure en plastique inférieure selon la revendication 1, dans laquelle la troisième surface (122a) comporte une zone centrale (122c) la plus proche du premier trou d'injection de liquide (111), et une distance entre la zone centrale (122c) de la troisième surface (122a) et le premier trou d'injection de liquide (111) le long d'une direction axiale du premier trou d'injection de liquide (111) est comprise entre 1 mm et 2,5 mm.

10. Structure en plastique inférieure selon la revendication 1, dans laquelle une forme de la partie en plastique inférieure (11) est carrée, et une barrière de soupape antidéflagrante (13) fait saillie à partir du milieu de la première surface (11a), la barrière de soupape antidéflagrante (13) s'étend le long d'une première direction, une rainure (131) est prévue au milieu de la barrière de soupape antidéflagrante (13), et la rainure (131) pénètre des deux côtés de la barrière de soupape antidéflagrante (13) dans une deuxième direction, la première direction et la deuxième direction sont toutes deux parallèles à la première surface (11a), la première direction et la deuxième direction sont perpendiculaires l'une à l'autre, et une distance entre une surface du composant de guidage d'écoulement élastique éloignée de la première surface (11a) et la première surface (11a) est supérieure ou égale à une distance entre une surface inférieure de rainure (1311) de la rainure (131) et la première surface (11a) ; ou
une forme de la partie inférieure en plastique (11) est circulaire, et une barrière de support en forme d'arc (14) fait saillie à partir d'un bord de la première surface (11a), et une distance entre une surface de l'élément de guidage élastique (122) éloignée de la première surface (11a) et la première surface (11a) est inférieure à une hauteur de saillie de la barrière de support en forme d'arc (14) par rapport à la première surface (11a).

11. Structure en plastique inférieure selon la revendication 1, dans laquelle il existe plusieurs composants de connexion (121), et les multiples composants de connexion (121) sont connectés à la première surface (11a), et les multiples composants de connexion (121) sont connectés au composant de guidage d'écoulement élastique (122), et des hauteurs des composants de connexion (121) dans une direction axiale du premier trou d'injection de liquide (111) sont identiques,
de préférence, dans laquelle les multiples composants de connexion (121) sont espacés de manière uniforme le long d'une direction circonférentielle du premier trou d'injection de liquide (111) sur un bord du premier trou d'injection de liquide (111).

12. Structure en plastique inférieure selon l'une quelconque des revendications 1 à 11, dans laquelle le composant de connexion (121) est muni d'une surface de guidage d'écoulement (1211) vers un centre du composant de guidage d'écoulement élastique (122), et la surface de guidage d'écoulement (1211) est configurée pour guider un électrolyte injecté à travers le premier trou d'injection de liquide (111),
de préférence, la surface de guidage d'écoulement (1211) est une pente de guidage d'écoulement, la pente de guidage d'écoulement comprend une première sous-pente de guidage d'écoulement (1211a) et une deuxième sous-pente de guidage (1211b), la première sous-pente de guidage d'écoulement (1211a) et la deuxième sous-pente de guidage (1211b) sont reliées selon un angle, une ligne d'intersection de la première sous-pente de guidage (1211a) et de la deuxième sous-pente de guidage (1211b) est parallèle à un axe du premier trou d'injection de liquide (111), la première sous-pente de guidage d'écoulement (1211a) et la deuxième sous-pente de guidage d'écoulement (1211b) sont symétriques par rapport à un plan où se trouvent la ligne d'intersection et l'axe du premier trou d'injection de liquide (111) ;
ou, de préférence, la surface de guidage d'écoulement (1211) est une surface courbe de guidage d'écoulement.

13. Ensemble de couvercle d'extrémité (20), comprenant :
une plaque de couvercle d'extrémité (21) ; et
une structure en plastique inférieure (10) selon l'une quelconque des revendications 1 à 12, la partie en plastique inférieure (11) de la structure en plastique inférieure (10) est reliée à la plaque de couvercle d'extrémité (21), et le guide d'écoulement (12) est situé sur un côté de la partie en plastique inférieure (11) éloigné de la plaque de couvercle d'extrémité (21), la plaque de couvercle d'extrémité (21) est pourvue d'un deuxième trou d'injection de liquide (211) relié au premier trou d'injection de liquide (111).

14. Dispositif de stockage d'énergie (30), comprenant :
un boîtier (31), une cellule nue (32) et un ensemble de couvercle d'extrémité (20) selon la revendication 13, le boîtier (31) comporte une ouverture (311), le noyau de batterie nu (32) est disposé dans le boîtier (31), et la plaque de couvercle d'extrémité (21) de l'ensemble de couvercle d'extrémité (20) est reliée de manière étanche à l'ouverture (311) et la structure en plastique inférieure (10) est disposée vers la cellule nue (32).

15. Équipement électrique comprenant un dispositif de stockage d'énergie (30) selon la revendication 14.
